# EUROPÄISCHE PATENTSCHRIFT

(11) **EP 1 536 886 B1**
(45) Veröffentlichungstag und Bekanntmachung des Hinweises auf die Patenterteilung: **28.12.2011**
(21) Anmeldenummer: 03793789.3
(22) Anmeldetag: 03.09.2003
(51) Int. Cl.: B01J 20/06, B01J 23/70, B01D 53/86, B01D 53/62

(54) **ADSORPTIONSMASSE UND VERFAHREN ZUR ENTFERNUNG VON KOHLENMONOXID AUS STOFFSTRÖMEN**
ADSORPTION MASS AND METHOD FOR REMOVING CARBON MONOXIDE FROM FLOWS OF MATERIAL
MASSE D'ADSORPTION ET PROCEDE DE SUPPRESSION DU MONOXYDE DE CARBONE CONTENU DANS DES FLUX DE MATIERE

(30) Priorität: 05.09.2002 DE 10241529
(43) Veröffentlichungstag der Anmeldung: 08.06.2005
(73) Patentinhaber: BASF SE, 67056 Ludwigshafen (DE)
(72) Erfinder: JUNICKE, Henrik, 68165 Mannheim (DE); HÖLZLE, Markus, 67281 Kirchheim (DE); BENDER, Michael, 67063 Ludwigshafen (DE)
(86) Internationale Anmeldenummer: PCT/EP2003/009760
(87) Internationale Veröffentlichungsnummer: WO 2004/022223

(56) Entgegenhaltungen:
- EP-A- 0 434 062
- EP-A- 0 804 959
- WO-A-96/14280
- DE-A- 19 848 595
- DE-A- 19 950 325
- US-A- 4 552 861
- US-A- 4 713 090
- US-A- 4 780 481
- US-A- 4 835 132
- US-A- 5 328 672
- US-A1- 2002 122 764
- US-B1- 6 238 640

## Beschreibung

Die vorliegende Erfindung betrifft eine Adsorptionsmasse und ein Verfahren zur Entfernung von Kohlenmonoxid aus Stoff strömen. Insbesondere betrifft die Erfindung eine Adsorptionsmasse und ein Verfahren zur Entfernung von Kohlenmonoxid aus Kohlenwasserstoffströmen.

In verschiedenen Gebieten der Technik ist es wichtig, besonders reine Stoffströme zur Verfügung zu haben. "Rein" bedeutet in diesem Zusammenhang, dass der Stoffstrom frei von Bestandteilen ist, die bei der bestimmungsgemäßen Verwendung des Stoffstroms störend wirken. Ein Beispiel ist Atemluft, die frei von toxischen Verbindungen sein muss. Ebenso werden etwa bei der Herstellung von elektronischen Bauteilen reine Stoffströme benötigt, zum keine Kontaminationen einzuschleppen, die die elektronischen Eigenschaften der hergestellten Bauteile beeinträchtigen, unter anderem wird dabei oft besonders reiner Stickstoff oder besonders reines Argon als Schutzgas benötigt. Ein anderes Beispiel sind katalytische chemische Reaktionen. Katalysatoren sind oft sehr empfindlich gegen Vergiftungen. Da man aus wirtschaftlichen Gründen üblicherweise den pro Volumen oder Masse des Katalysators einzusetzenden Einsatzstoffstrom zu maximieren sucht, können schon außerordentlich kleine Mengen an Verunreinigungen im Einsatzstoffstrom sich auf dem Katalysator ansammeln und diesen vergiften. Typischerweise werden für Olefinpolymerisationsreaktionen an modernen Katalysatoren - beispielsweise Metallocenkatalysatoren - Olefinströme benötigt, die nicht mehr als einige ppb (parts per billion, d.h., 10⁻⁹ Anteile Verunreinigungen pro Anteil des gewünschten Stoffs) enthalten ("polymer grade"-Olefine). Aus typischen Olefinquellen (Steamcracker, Fluid Catalytic Cracker, Dehydrierungen, MTO-Verfahren ("Methanol to Olefins") stammende Olefine enthalten meist sehr viel höhere Anteile (ppm- oder sogar Promille-Bereich) an Verunreinigungen wie Kohlenmonoxid oder Sauerstoff ("chemical grade"); diese Anteile müssen vor der Verwendung zur Polymerisation entsprechend erniedrigt werden.

Typischerweise sind die zu reinigenden Stoffströme Luft, Stickstoff oder Argon oder Kohlenwasserstoffe wie Ethylen, Propylen, 1-Buteh, 2-Buten, 1,3-butadien oder Styrol. Typische Verunreinigungen, die in aller Regel entfernt werden müssen, sind Sauerstoff und Kohlenmonoxid, und oft auch Wasser, Kohlendioxid, Wasserstoff, oder auch Schwefel-, Arsen- oder Antimonverbindungen. Verfahren zur Entfernung solcher Verunreinigungen aus Stoffströmen sind bekannt.

Am bekanntesten ist die Entfernung von Kohlenmonoxid aus sauerstoffhaltigen Gasströmen, beispielsweise aus Atemluft. Dies geschieht meist durch katalytische Umsetzung von Kohlenmonoxid mit Sauerstoff, in der Regel an Kupfer enthaltenden Katalysatoren. Der meistverwendete Katalysator dieser Reaktion ist Hopcalit, ein ursprünglich für die CO-Entfernung aus Atemluft in Atemschutzmasken entwickeltes, für die Umsetzung von Kohlenmonoxid mit Sauerstoff höchst aktives Kupfer-Mangan-Mischoxid, an dem sich das hochtoxische Kohlenmonoxid mit Sauerstoff zu Kohlendioxid umsetzt.

Es sind jedoch auch andere Verwendungen von Hopcalit und Verfahren zur Reinigung anderer Stoffströme als Atemluft bekannt. So offenbart WO 98/41 597 A1 ein Verfahren zur Entfernung von Alkinen, einfach oder mehrfach ungesättigten Kohlenwasserstoffen, Schwefel-, Antimon- oder Arsenverbindungen, Sauerstoff, Wasserstoff und Kohlenmonoxid aus Stoffströmen durch eine Abfolge von zwei oder drei bestimmten katalytischen und absorptiven Verfahrensschritten. EP 662 595 A1 lehrt ein Verfahren zur Entfernung von Wasserstoff, Kohlenmonoxid und Sauerstoff aus kaltem flüssigem Stickstoff durch Inkontaktbringen mit bestimmten Zeolithen oder anderen Metalloxiden, insbesondere Hopcalit. EP 750 933 A1 offenbart ein ähnliches Verfahren zur Entfernung von Sauerstoff und Kohlenmonoxid aus kaltem Stickstoff oder kalten Edelgasen durch Inkontaktbringen mit Metalloxiden, insbesondere Hopcalit. Bei den angewendeten tiefen Temperaturen unterhalb von -40°C findet allerdings keine oder nur wenig katalytische Reaktion statt, Sauerstoff und Kohlenmonoxid werden am Hopcalit adsorbiert und reagieren erst bei höherer Temperatur ab, es sei denn, sie werden in der Kälte in einem Desorptionsschritt entfernt. EP 820 960 A1 offenbart ein ebenfalls als "Adsorption" bezeichnetes Verfahren zur Entfernung von Sauerstoff und Kohlenmonoxid aus Stickstoff oder Edelgasen durch Inkontaktbringen mit Metalloxiden wie Hopcalit, insbesondere bei Temperaturen von 5 bis 50°C. Auch hier wird das Verfahren zwar als "Adsorption" von CO und O₂ beschrieben, jedoch nicht erklärt, warum Hopcalit dabei nicht wie üblich bei katalytisch wirken sollte, sondern als Adsorbens.

Bei diesen Verfahren zur Entfernung von Kohlenmonoxid in Gegenwart von Sauerstoff durch deren Umsetzung entsteht Kohlendioxid. Dies kann in nachfolgenden Verfahren inert sein oder selbst eine störende Verunreinigung darstellen. Im letzteren Fall wird es entfernt, auch hierfür sind verschiedene Verfahren bekannt. Beispielsweise lehrt CA 2 045 060 A1 ein Verfahren zur Entfernung von Kohlenmonoxid und Sauerstoff aus Inertgasströmen mit nachfolgender Entfernung des Kohlendioxids.

Bei manchen Anwendungen muss Kohlenmonoxid jedoch auf andere Weise als durch Umsetzung mit Sauerstoff entfernt werden, beispielsweise dann, wenn zwar Kohlenmonoxid, aber kein Sauerstoff oder lediglich ein stöchiometrischer Sauerstoff-Unterschuss im zu reinigenden Stoffstrom enthalten ist. In manchen Anwendungsfällen muss Sauerstoff vor dem Kohlenmonoxid entfernt werden, insbesondere dann, wenn neben der Bildung von Kohlendioxid auch sonstige störende Nebenprodukte gebildet werden können. Beispielsweise können bei der Entfernung von Sauerstoff und Kohlen= monoxid an Kupfer enthaltenden Katalysatoren aus flüssigen Kohlenwasserstoffen wie Propylen, Buten, Butadien oder Styrol auch Oxidationsprodukte des Kohlenwasserstoffs gebildet werden (sogenannte "Oxygenate"), die selbst störende Verunreinigungen darstellen. In solchen Fällen muss der Sauerstoff vor der Entfernung des Kohlenmonoxids entfernt werden, und Kohlenmonoxid kann nicht durch Oxidation entfernt werden.

In solchen Fällen wird Kohlenmonoxid daher üblicherweise durch Destillation entfernt, damit ist jedoch keine CO-Entfernung bis auf Restgehalte im ppb-Bereich möglich. Es sind aber auch adsorptive Verfahren und Adsorbentien dafür bekannt. US 4 917 711 offenbart ein Adsorbens, das eine Kupferverbindung auf einem hochoberflächigen Träger enthält. WO 01/7383 A1 lehrt ein Verfahren zur Reinigung von Olefinströmen durch Überleiten über poröse Adsorbentien wie Ruß oder Aluminium- und/oder Siliciumoxide. JP 02 144 125 A2 (CAS Abstract 113:177 506) lehrt ein Verfahren zur Entfernung von Kohlenmonoxid und Metallcarbonylen aus bei der Halbleiterfertigung entstehenden Abgasen durch Adsorption an Manganoxid und Kupferoxid enthaltenden Adsorptionsmassen. JP 05 337 363 A2 (CAS Abstract 120:274 461) offenbart Adsorbentien zur Kohlenmonoxidentfernung, die Palladium auf einem Träger enthalten, wobei der Träger Oxide von Elementen der Gruppen IB, II (ohne Be, Cd, Hg und Ra), III (ohne Al, Tl und den Actiniden), IV (ohne C, Si, Pb und Hf), V (ohne N, P, As und die "Pa-Reihe"), VI (ohne O, S, Se und U), VIIB und der Eisengruppe aus Gruppe VIII des Periodensystems der Elemente enthält.

WO 95/21 146 A1 lehrt ein Verfahren zur Entfernung von Kohlen= monoxid und, falls vorhanden, auch Arsin aus flüssigen Kohlenwasserstoffströmen durch Inkontaktbringen mit einem Sorbens, das je nach Ausführungsform disperses Kupfer in den Oxidationstufen 0, +1 oder +2, und in bestimmten Fällen auch Mangandioxid enthält. EP 537 628 A1 offenbart ein Verfahren zur Entfernung von Kohlenmonoxid aus alpha-Olefinen und gesättigten Kohlenwasserstoffen durch Inkontaktbringen mit einem sogenannten Katalysatorsystem auf Basis mindestens eines Oxids eines aus Cu, Fe, Ni, Co, Pt und Pd gewählten Metalls und mindestens eines Oxids eines aus den Gruppen VB, VIB oder VIIB des Periodensystems der Elemente gewählten Metalls. WO 95/23 644 A1 lehrt einen Kupferkatalysator zur Hydrierung von Kohlenoxiden, beispielsweise zu Methanol, oder für die sogenannte shift-Reaktion von Kohlenmonoxid mit Wasser zu Kohlendioxid und Wasserstoff, der neben dispersem Kupfer auch Stabilisatoren wie Siliciumdioxid, Aluminiumoxid, Chromoxid, Magnesiumoxid und/oder Zinkoxid und wahlweise auch einen Träger wie Aluminiumoxid, Zirkondioxid, Magnesiumoxid und/oder Siliciumdioxid enthält, und seine Aktivierung und Passivierung.

Die steigenden Anforderungen an die Reinheit von Stoffströmen für manche Anwendungsgebiete machen jedoch neue und verbesserte Hilfsmittel und Verfahren zur Entfernung von Verunreinigungen notwendig. Insbesondere problematisch ist die Entfernung von Kohlenmonoxid aus Kohlenwasserstoffen, und dort besonders aus typischerweise in flüssiger Form vorliegenden Kohlenwasserstoffen wie Propen, 1- oder 2-Buten. Dieser Erfindung liegt daher die Aufgabe zu Grunde, ein neues Adsorptionsmittel und ein neues Verfahren zur adsorptiven Entfernung von Kohlenmonoxid aus Stoffströmen zu finden.

Demgemäß wurde eine Adsorptionsmasse wie in Anspruch 1 definiert gefunden. Ferner wurden Verfahren zur Entfernung von Kohlenmonoxid aus Stoffströmen gefunden, die durch die Verwendung der erfindungsgemäßen Adsorptionsmasse als Adsorptionsmasse, aber alternativ auch durch deren Verwendung als Katalysator der Umsetzung von Kohlenmonoxid mit Sauerstoff oder als Reaktionspartner des Kohlenmonoxids gekennzeichnet sind. Insbesondere wurde ein Verfahren wie in Anspruch 2 definiert gefunden.

Die erfindungsgemäße Adsörptionsmasse wirkt im erfindungsgemäßen adsorptiven Verfahren durch Adsorption. Unter Adsorption wird die Anlagerung eines Adsorbats an die Oberfläche einer Adsorptionsmasse ("Adsorbens") bezeichnet, die im Allgemeinen durch Desorption reversibel ist. Das Adsorbat kann am Adsorbens auch chemisch umgesetzt werden, bleibt das Adsorbens dabei chemisch im wesentlichen unverändert, spricht man von Katalyse (Beispiel: das bekannte Verfahren zur Umsetzung von CO mit Sauerstoff an einem metallischem Kupferkatalysator zu Kohlendioxid), setzt sich das Adsorbat chemisch mit dem Adsorbens um, von Absorption (Beispiele: das bekannte Verfahren zur Entfernung von Sauerstoff aus Gasströmen durch Inkontaktbringen mit metallischem Kupfer unter Bildung von Kupfer(I)oxid und/oder Kupfer(II)oxid; oder das bekannte Verfahren zur Entfernung von Kohlenmonoxid aus Gasströmen durch Inkontaktbringen mit Kupfer(I)oxid und/oder Kupfer(I)oxid unter Bildung von Kohlendioxid und metallischen Kupfer). Bei einer reinen Adsorption wie auch bei der Katalyse wird das Adsorbat oder sein Reaktionsprodukt durch Desorption wieder von der Oberfläche entfernt, bei der Absorption ist meist eine chemische Regenerierung des Absorbens nötig. Sowohl bei der Katalyse als auch bei der Absorption ist der einleitende Schritt jedenfalls eine Adsorption, und ob ein adsorptives Reinigungsverfahren letztendlich (z.B. bei der Regenerierung der Adsorptionsmasse) in einem katalytischen oder einem absorptiven Schritt mündet oder ein rein adsorptives Verfahren vorliegt, hängt vom Einzelfall ab. Im Rahmen der vorliegenden Erfindung bedeutet "adsorptiv", dass während der Entfernung von CO aus dem zu reinigenden Stoffstrom kein Reaktiongprodukt des Kohlenmonoxids in den Stoffstrom abgegeben wird, und die verwendete Adsorptionsmasse chemisch im wesentlichen unverändert bleibt, also ihre Zusammensetzung nicht oder nur in unwesentlicher Weise ändert. Ob bei der Regenerierung des erfindungsgemäßen Adsorbens dagegen Kohlenmonoxid oder ein Umsetzungsprodukt davon abgegeben werden, also Katalyse stattfindet oder nicht, ist für die Erfindung unerheblich.

Adsorptionsmassen oder Absorptionsmassen werden umgangssprachlich oft auch als "Katalysatoren" bezeichnet, ohne bei ihrem bestimmungsgemäßen Einsatz tatsächlich katalytisch zu wirken.

Die erfindungsgemäße Adsorptionsmasse enthält Kupfer, Zink und Zirkon. In Reinform enthält sie im allgemeinen Kupfer in einer Menge, die mindestens 30 Gew.-%, vorzugsweise mindestens 50 Gew.-% und in besonders bevorzugter Weise mindestens 60 Gew.-%, sowie im allgemeinen höchstens 99,8 Gew.-%, vorzugsweise höchstens 90 Gew.-% und in besonders bevorzugter Weise höchstens 80 Gew.-% Kupferoxid CuO, jeweils bezogen auf die Gesamtmenge der Adsorptionsmasse entspricht. Kupfer liegt in der einsatzfertigen Adsorptionsmasse teilweise in metallischer Form und teilweise in Form von Kupferverbindungen überwiegend Cu(I)- und Cu(II)-Oxiden vor. Die erfindungsgemäße Adsorptionsmasse enthält in Reinform Zink in einer Menge, die mindestens 0,1 Gew.-%, vorzugsweise mindestens 5 Gew.-% und in besonders bevorzugter Weise mindestens 10 Gew.-%, sowie im allgemeinen höchstens 69,9 Gew.-%, vorzugsweise höchstens 40 Gew.-% und in besonders bevorzugter Weise höchstens 30 Gew.-% Zinkoxid ZnO, jeweils bezogen auf die Gesamtmenge der Adsorptionsmasse entspricht. Zink liegt in der einsatzfertigen Adsorptionsmasse in Form von Zinkoxid ZnO vor. Sie enthält in Reinform ferner Zirkon in einer Menge, die mindestens 3 Gew.-% und in besonders bevorzugter Weise mindestens 5 Gew.-%, sowie im allgemeinen höchstens 69,9 Gew.-%, vorzugsweise höchstens 30 Gew.-% und in besonders bevorzugter Weise höchstens 20 Gew.-% Zirkondioxid ZrO₂, jeweils bezogen auf die Gesamtmenge der Adsorptionsmasse entspricht. Zirkon liegt in der einsatzfertigen Adsorptionsmasse in Form von Zirkondioxid ZrO₂ vor. "Reinform" bedeutet im Rahmen dieser Erfindung, dass außer den Kupfer (oxid)- Zinkoxid- und Zirkondioxid- (dieser wahlweise zum Teil durch Aluminiumoxid ersetzt) =Anteilen keine weiteren Bestandteile enthalten sind, abgesehen von unwesentlichen Bestandteilen, die beispielsweise noch aus der Fertigung mitgeschleppt werden,wie Überreste von Ausgangsstoffen und Reagenzien, Hilfsstoffe zur Formgebung und Ähnliches. "Reinform" bedeutet also, dass die Adsorptionsmasse im wesentlichen aus den genannten Komponenten besteht.

Die prozentualen Mengen der Komponenten der Adsorptionsmasse addieren sich stets zu 100 Gew.-%.

Eine sehr gut geeignete Adsorptionsmasse besteht in Reinform beispielsweise aus ca. 70 Gew.-% CuO, ca. 20 Gew.-% ZnO und ca. 10 Gew.-% ZrO₂ wobei sich deren Anteile zu 100 Gew.-% addieren.

Die erfindungsgemäße Adsorptionsmasse kann, muss aber nicht unbedingt in Reinform vorliegen. Es ist möglich, sie mit Hilfsstoffen zu vermischen oder sie auf einen Träger aufzubringen. Geeignete Träger sind die bekannten Katalysatorträger wie beispielsweise Aluminiumoxid, Siliciumdioxid, Zirkondioxid, Alumosilikate, Tone, Zeolithe, Kieselgur und Ähnliche.

Die erfindungsgemäße Adsorptionsmasse wird hergestellt wie bekannte oxidische Katalysatoren. Ein bequemes und bevorzugtes Verfahren zur Herstellung der erfindungsgemäßen Adsorptionsmasse umfasst die folgenden Verfahrensschritte in der genannten Reihenfolge:
a) Herstellen einer Lösung der Komponenten der Adsorptionsmasse und/oder von löslichen Ausgangsverbindungen davon;
b) Fällen eines Festkörpers aus dieser Lösung durch Zugabe einer Base;
c) Abtrennung und Trocknung des Festkörpers;
d) wahlweise eine Kalzination des Festkörpers;
e) Verformung des Festkörpers zu Formkörpern; und
f) wahlweise eine Kalzination der Formkörpern;
mit der Maßgabe, dass mindestens einer der beiden Kalzinationsschritte d) oder f) durchgeführt wird.

Im ersten Verfahrensschritt, Schritt a), wird in üblicher Weise eine Lösung der Komponenten der Adsorptionsmasse hergestellt, beispielsweise durch Lösen in einer Säure wie Salpetersäure. Wahlweise werden statt der Komponenten der Adsorptionsmasse auch deren Ausgangsverbindungen verwendet, beispielsweise die Nitrate, Carbonate, Hydroxicarbonate der Metalle in einer wässrigen Lösung, die auch sauer, beispielsweise salpetersauer sein kann, gelöst. Das Mengenverhältnis der Salze in der Lösung wird gemäß der gewünschten Endzusammensetzung der Adsorptionsmasse stöchiometrisch berechnet und eingestellt.

Aus dieser Lösung wird im Schritt b) ein Festkörper als Vorläufer der Adsörptionsmasse gefällt. Dies erfolgt in üblicher Weise, vorzugsweise durch Erhöhung des pH-Werts der Lösung durch Zugabe einer Base, etwa durch Zugabe von Natronlauge oder Sodalösung ,

Das entstehende feste Fällprodukt wird vor der Trocknung in Schritt c) in der Regel von der überstehenden Lösung abgetrennt, etwa durch Filtrieren oder Dekantieren, und mit Wasser frei von löslichen Bestandteilen wie Natriumnitrat gewaschen. Das Fällprodukt wird dann normalerweise vor der Weiterverarbeitung mit üblichen Trocknungsmethoden getrocknet. Im allgemeinen genügt dazu eine Behandlung bei leicht erhöhter Temperatur, etwa mindestens 80°C, vorzugsweise mindestens 100°C und in besonders bevorzugter Weise mindestens 120°C statt, über einen Zeitraum von 10 min bis 12 Stunden, vorzugsweise 20 min bis 6 Stunden und in besonders bevorzugter Weise 30 min bis 2 Stunden. Es ist auch möglich und besonders bequem, das Produkt der Fällung direkt - ein gewisser Alkali-, zum Beispiel Natriumgehalt der Adsorptionsmasse stört im allgemeinen nicht - oder nach Waschen durch Sprühtrocknung zu einem trockenen weiterverarbeitungsfähigen Pulver umzuwandeln.

Im Anschluss an die Trocknung wird das gefällte und getrocknete vorprodukt der Adsorptionsmasse wahlweise dem Kalzinationsschritt d) unterzogen. Die angewendete Kalzinationstemperatur liegt dabei im allgemeinen bei mindestens 250°C, vorzugsweise mindestens 300°C und in besonders bevorzugter Weise bei mindestens 350°C, sowie im allgemeinen bei höchstens 500°C, vorzugsweise höchstens 450°C und in besonders bevorzugter Weise bei höchstens 410°C. Die Kalzinationsdauer beträgt im allgemeinen mindestens 10 Minuten, vorzugsweise mindestens 20 Minuten und in besonders bevorzugter Weise mindestens 30 Minuten sowie im allgemeinen höchstens 12 Stunden, vorzugsweise höchstens 6 Stunden und in besonders bevorzugter Weise höchstens 4 Stunden. Der Trocknungsschritt c) und der Kalzinationsschritt d) können direkt ineinander übergehen.

Nach dem Trocknungsschritt c) oder dem Kalzinationsschritt d) wird die Adsorptionsmasse oder ihr Vorläufer im Formgebungsschritt e) mit üblichen Formgebungsverfahren wie Verstrangen, Tablettieren oder Pelletisieren zu Formkörpern wie Stränglingen oder Extrudaten, Tabletten oder - auch Kugelförmigen - Pellets verarbeitet.

Nach dem Formgebungsschritt wird die Adsorptionsmasse oder ihr Vorläufer wahlweise einem Kalzinationsschritt f) unterzogen. Die in Schritt f) anzuwendenden Kalzinationsbedingungen sind mit denen des Kalzinationsschritts d) identisch.

Die Adsorptionsmasse wird im Zuge ihrer Herstellung mindestens einem der beiden Kalzinationsschritte d) oder f) unterzogen, wahlweise auch beiden. Bei dem oder den Kalzinationschritten wird der Adsorptionsmassenvorläufer zur eigentlichen Adsorptionsmasse umgewandelt und unter Anderem wie üblich auch die BET-Oberfläche und das Porenvolumen der Adsorptionsmasse eingestellt, wobei bekanntermaßen die BET-Oberfläche und das Porenvolumen mit steigender Kalzinationsdauer und Kalzinationstemperatur sinken.

Vorzugsweise wird zumindest insgesamt so lange kalziniert, dass der Gehalt der Adsorptionsmasse an Carbonat (berechnet als CO3²⁻) höchstens 10 Gew.-%, bezogen auf das Gesamtgewicht des Kalzinationsprodukts beträgt, und ihre BET-Oberfläche einen Wert im Bereich von mindestens 40 und höchstens 100 m²/g aufweist. Das Porenvolumen der Adsorptionsmasse, gemessen als Wasseraufnahme, wird bei der Kalzination auf einen Wert von mindestens 0,05 ml/g eingestellt. Diese Werte sind für die erfindungsgemäße Adsorptionsmasse bevorzugt.

Die erfindungsgemäße Adsorptionsmasse kann auch, wie oben erwähnt, auf einem Träger abgeschieden werden. Dies geschieht durch übliche Tränkverfahren oder Auffällverfahren. Ein Auffällverfahren ist bekanntlich ein Fällverfahren in Gegenwart eines Trägers oder eines Trägervorläufers. Zur Durchführung eines Auffällverfahrens wird vorzugsweise im oben ausgeführten Fällverfahren der in Schritt a) hergestellten Lösung ein Träger oder Trägervorläufer zugesetzt. Falls der Träger bereits in Form von vorgeformten fertigen Formkörpern vorliegt, also ein reines Tränkverfahren entfällt der Förmgebungsschritt e), ansonsten wird der Träger im Zuge der Verarbeitung des Vorprodukts der Adsorptionsmasse durch Fällung, Trocknung, Kalzinierung und Formgebung mit ausgebildet.

Ein bevorzugtes Tränkverfahren zur Herstellung der erfindungsgemäßen Adsorptionsmasse wird mit vorgeformten Trägern durchgeführt und umfasst die folgenden Verfahrensschritte in der genannten Reihenfolge:
a) Herstellen einer Lösung der Komponenten der Adsorptionsmasse und/oder von löslichen Ausgangsverbindungen davon;
b) Tränken eines vorgeformten Trägers mit dieser Lösung;
c) Trocknung des getränkten Trägers; und
d) Kalzination des getränkten und getrockneten Trägers.

Verfahrensschritt a) dieses Tränkverfahrens wird wie der oben beschriebene Schritt a) des Fällverfahrens durchgeführt. In Schritt b) wird ein vorgeformter Träger mit der Lösung getränkt. Der vorgeformte Träger hat eine dem Einsatzzweck entsprechend gewählte Form, beispielsweise Stränglinge oder Extrudate, Tabletten oder - auch kugelförmige - Pellets. Die Tränkung wird entweder mit überstehender Lösung oder als Tränkung mit der dem Porenvolumen des Trägers entsprechenden Lösungsmenge ("incipient wetness") durchgeführt. Nach der Tränkung wird der getränkte Träger in Schritten c) und d) wie das Fällprodukt beim Fällverfahren getrocknet und kalziniert. Mit einem vorgeformten Träger sind, entfällt dabei der Formgebungsschritt.

Die Adsorptionsmassen=Formkörper werden zu ihrer Verwendung in einen üblicherweise als "Adsorber", gelegentlich auch "Reaktor" bezeichneten Behälter gefüllt, in dem sie mit dem zu reinigenden Stoffstrom in Kontakt gebracht werden.

Die fertige Adsorptionsmasse wird vorzugsweise vor ihrem Einsatz zur Adsorption von CO aktiviert. Es ist auch empfehlenswert, sie vor ihrem Einsatz auch nochmals zu trocknen, um Spuren anhaftender Feuchtigkeit zu entfernen und die Adsorptionskapazität zu erhöhen.

Bequemerweise führt man diese nochmalige Trocknung und die Aktivierung im Adsorber durch, da ansonsten ein hoher Aufwand nötig ist, um die einsatzfertige aktivierte Adsorptionsmasse beim Einfüllen in den Adsorber vor Luft und Feuchtigkeit zu schützen.

Die nochmalige Trocknung wird durch Heizen der Adsorptionsmasse auf eine Temperatur von im allgemeinen mindestens 100°C, vorzugsweise mindestens 150°C und in besonders bevorzugter Weise mindestens 180°C sowie im allgemeinen höchstens 300°C, vorzugsweise höchstens 250°C und in besonders bevorzugter Weise höchstens 220°C erreicht. Eine geeignete Trocknungstemperatur beträgt beispielsweise ca. 200°C. Die Adsorptionsmasse wird so lange bei der Trocknungstemperatur gehalten, bis nur noch nicht mehr störende Reste anhaftender Feuchtigkeit vorhanden sind; dies ist im allgemeinen bei einer Trocknungsdauer von mindestens 10 Minuten, vorzugsweise mindestens 30 Minuten und in besonders bevorzugter Weise mindestens 1 Stunde sowie im allgemeinen höchstens 100 Stunden, vorzugsweise höchstens 10 Stunden und in besonders bevorzugter Weise höchstens 4 Stunden der Fall. Vor= zugsweise findet die Trocknung in einem Gasstrom statt, um die Feuchtigkeit aus der Adsorptionsmassenschüttung abzutransportieren. Dazu kann beispielsweise trockene Luft verwendet werden, besonders bevorzugt ist es jedoch, die Adsorptionsmassenschüttung im Adsorber mit einem Inertgas zu durchströmen, geeignet sind hier insbesondere Stickstoff oder Argon.

Die Aktivierung erfolgt durch zumindest teilweise Reduktion des in der Adsorptionsmasse enthaltenen Kupfers zu Kupfer= metall. Dies kann im Prinzip durch jedes Reduktionsmittel erfolgen, das Kupfer aus den Oxidationsstufen I oder II zur Oxidationsstufe 0 reduzieren kann. Dies kann mit flüssigen oder gelösten Reduktionsmitteln erfolgen, in diesem Fall muss nach der Aktivierung getrocknet werden. Sehr viel bequemer ist deshalb die Reduktion mit einem gasförmigen Reduktionsmittel nach der Trocknung, vor allem die Reduktion mit Wasserstoff durch Überleiten eines Wasserstoff enthaltenen Gases. Die bei der Aktivierung anzuwendende Temperatur beträgt im allgemeinen mindestens 80°C, vorzugsweise mindestens 100°C und in besonders bevorzugter Weise mindestens 110°C sowie im allgemeinen höchstens 200°C, vorzugsweise höchstens 160°C und in besonders bevorzugter Weise höchstens 130°C erreicht. Eine geeignete Aktivierungstemperatur ist beispielsweise ca. 120°C. Die Reduktion ist exotherm. Die Menge an zugeführtem Reduktionsmittel ist so einzustellen, dass das gewählte Temperaturfenster nicht verlassen wird. Der Verlauf der Aktivierung kann anhand der in der Schüttung des Adsorptionsmittels gemessenen Temperatur verfolgt werden ("temperaturprogrammierte Reduktion, TPR").

Eine bevorzugte Methode zur Aktivierung der Adsorptionsmasse ist es, im Anschluss an eine unter einem Stickstoffstrom durchgeführte Trocknung die gewünschte Aktivierungstemperatur einzustellen und dem Stickstoffstrom eine geringe Menge Wasserstoff beizumischen. Ein geeignetes Gasgemisch enthält zu Beginn beispielsweise mindestens 0,1 Vol.-% Wasserstoff in Stickstoff, vorzugsweise mindestens 0,5 Vol.-% und in besonders bevorzugter Weise mindestens 1 Vol.-%, sowie höchstens 10 Vol.-%, vorzugsweise höchstens 8 Vol.-% und in besonders bevorzugter Weise höchstens 5 Vol.-%. Ein geeigneter Wert ist beispielsweise 2 vol.-%. Diese Anfangskonzentration wird entweder beibehalten oder erhöht, um das gewünschte Temperaturfenster zu erreichen und zu halten.

Die Reduktion ist vollständig, wenn trotz konstantem oder steigendem Pegel des Reduktionsmittels die Temperatur in der Schüttung der Adsorptionsmasse zurückgeht. In bevorzugter Weise wird das in der Adsorptionsmasse enthaltene Kupfer nicht vollständig zu metallischem Kupfer reduziert, so dass die aktivierte Adsorptionsmasse sowohl metallisches wie auch oxidisches Kupfer enthält. Eine typische Aktivierungsdauer für diesen Fall beträgt im allgemeinen mindestens 1 Stunde, vorzugsweise mindestens 10 Stunden und in besonders bevorzugter Weise mindestens 15 Stunden sowie im allgemeinen höchstens 100 Stunden, vorzugsweise höchstens 50 Stunden und in besonders bevorzugter Weise höchstens 30 Stunden.

Sofern der Anteil an metallischem Kupfer zu hoch werden sollte, kann die Adsorptionsmasse in analoger Weise auch oxidiert werden. Dazu wird vorzugsweise statt eines Wasserstoff/Stickstoff-Gemisches ein Sauerstoff/Stickstoff-Gemisch über die Adsorptionsmasse geleitet.

Im Anschluss an die Aktivierung ist die erfindungsgemäße Adsorptionsmasse einsatzbereit.

Das erfindungsgemäße adsorptive Verfahren ist ein Verfahren zur Entfernung von Kohlenmonoxid aus Stoffströmen durch Adsorption, das dadurch gekennzeichnet ist, dass man den Kohlenmonoxid enthaltenden Stoffstrom mit einer Adsorptionsmasse in Kontakt bringt, die Kupfer, Zink und Zirkon enthält. Das erfindungsgemäße adsorptive Verfahren ist also durch die Verwendung der erfindungsgemäßen Adsorptionsmasse gekennzeichnet. Ein Vorzug des erfindungsgemäßen adsorptiven Verfahrens ist seine Anwendbarkeit auf Stoffströme, die entweder sauerstofffrei sind, bei einer Temperatur vorliegen, die für die übliche katalytische Umsetzung von Kohlenmonoxid mit Sauerstoff zu Kohlendioxid nicht ausreicht, oder bei deren weiterer Verwendung Kohlendioxid oder oxygenate stören.

Im Prinzip kann mit dem erfindungsgemäßen adsorptiven Verfahren jeder Stoffstrom von Verunreinigungen durch Kohlenmonoxid befreit werden, beispielsweise Inertgasströme (Stickstoff, Helium, Neon, Krypton, Xenon und/oder Argon) oder Kohlenwasserstoffströme wie beispielsweise Alkane (Methan, Ethan, Propan, Butan, ihre Gemische, Isomeren und Isomerengemische) oder Alkene (auch "Olefine" genannt) wie Ethen, Propen, 1- Buten, 2-Buten, 1,3-Butadien und/oder Styrol.

Es ist ebenso möglich, die erfindungsgemäße Adsorptionsmasse in nicht-adsorptiver Weise zur Entfernung von Kohlenmonoxid zu verwenden. Dies ist insbesondere vorteilhaft, wenn der von Kohlenmonoxid zu befreiende Stoffstrom neben Kohlenmonoxid auch Sauerstoff enthält, bei einer für die katalytische Umsetzung von Sauerstoff mit Kohlenmonoxid ausreichend hohen Temperatur vorliegt, und bei seiner weiteren Verwendung Kohlendioxid oder Oxygenate nicht stören. So kann Kohlenmonoxid aus Kohlenmonoxid und Sauerstoff enthaltenden Stoffströmen durch katalytische Umsetzung von Kohlenmonoxid mit Sauerstoff an der als Katalysator verwendeten erfindungsgemäßen Adsorptionsmasse zu Kohlendioxid umgesetzt und so aus dem Stoffstrom entfernt werden. Ebenso kann Kohlenmonoxid aus Kohlenmonoxid enthaltenden Stoffströmen durch Umsetzung von Kohlenmonoxid mit einer Kupfer(I)- und/oder Kupfer(II)oxid enthaltenden erfindungsgemäßen Adsorptionsmasse unter Bildung von metallischem Kupfer zu Kohlendioxid aus dem Stoffstrom entfernt werden. Genauso ist es möglich, Sauerstoff aus Stoffströmen durch Absorption an der erfindungsgemäßen, metallisches Kupfer enthaltenden Adsorptionsmasse unter Bildung von Kupfer(I)oxid und/oder Kupfer(II)oxid zu entfernen. Mit anderen Worten: Die erfindungsgemäße Adsorptionsmasse kann in allen bekannten Verfahren eingesetzt werden, in denen Kupfer enthaltende Festkörper katalytisch, absorptiv oder als Reaktionspartner verwendet werden.

Bevorzugterweise wird das erfindungsgemäße adsorptive Verfahren zur Entfernung von Kohlenmonoxid aus Alkenströmen verwendet, insbesondere zur Entfernung von Kohlenmonoxid aus Alkenströmen, die üblicherweise flüssig vorliegen. Flüssig vorliegende Alkene haben typischerweise - abgesehen von der Anwendung unüblich hoher Drücke - nicht die zur katalytischen Entfernung von Kohlenmonoxid durch Umsetzung mit Sauerstoff notwendige Temperatur, zudem würde bei der anschließenden Verwendung zur Polymerisation die Oxygenatbildung stören.

Besonders geeignet ist das erfindungsgemäße adsorptive Verfahren zur Entfernung von Kohlenmonoxid aus Propen, 1-Buten, 2-Buten, 1,3-Butadien, Butengemischen, Buten-/Butadiengemischen oder Styrol, um den Kohlenmonoxidgehalt auf den für "polymer grade"-Olefine zulässige Werte zu senken. In einer ganz besonders bevorzugten Ausführungsform wird mit dem erfindungsgemäßen Verfahren Kohlenmonoxid aus flüssigem Propen adsorptiv entfernt.

Das erfindungsgemäße adsorptive Verfahren ermöglicht die Entfernung von Kohlenmonoxid aus Stoffströmen. Es ist besonders geeignet zur Entfernung von Kohlenmonoxid aus Stoffströmen, die im allgemeinen mindestens 0,001 ppm (bei Gasen Vol.-ppm, bei Flüssigkeiten Gew.-ppm), vorzugsweise mindestens 0,01 ppm, sowie im allgemeinen höchstens 1000 ppm, vorzugsweise höchstens 100 ppm und in besonders bevorzugter Weise höchstens 10 ppm Kohlenmonoxid enthalten. Für relativ hohe Anfangskonzentrationen an Kohlenmonoxid ist es meist wirtschaftlicher, vorab ein anderes bekanntes Reinigungsverfahren wie Destillation, katalytische Oxidation des Kohlenmonoxids mit Sauerstoff zu Kohlendioxid oder Oxidation des Köhlenmonoxids mit Kupferoxid unter Bildung von metallischem Kupfer und Kohlendioxid, wahlweise mit nachfolgender Abtrennung von Kohlendioxid und Oxygenaten durchzuführen, da sonst die Adsorptionskapazität der Adsorptionsmasse zu schnell erreicht werden kann.

Zur Durchführung des erfindungsgemäßen adsorptiven Verfahrens wird der von Kohlenmonoxid zu befreiende Stoffstrom im Adsorber über die Schüttung der erfindungsgemäßen Adsorptionsmassen-Formkörper geleitet.

Die Temperatur ist für das erfindungsgemäße adsorptive Verfahren aus technischer Sicht nicht oder nur wenig kritisch. Typische Temperaturen liegen im Bereich von mindestens -270°C; vorzugsweise mindestens -100°C und in besonders bevorzugter Weise bei -40°C, sowie höchstens 300°C, vorzugsweise höchstens 200°C und in besonders bevorzugter Weise höchstens 100°C. Bequemerweise wird die Temperatur nicht gesondert beeinflusst, sondern bei der Temperatur gearbeitet, die der zu behandelnde Stoffstrom hat.

Der wesentliche Parameter, mit dem der Abreicherungsgrad bestimmt wird, ist - neben der wie beschrieben bequemerweise nicht besonders beeinflussten Temperatur - die Kontaktzeit zwischen Stoffstrom und Adsorptionsmasse. Diese Kontaktzeit wird durch die Geschwindigkeit des Stoffstroms und das Volumen des Adsorptionsmassen-Betts bestimmt. Meist wird der Volumenstrom des zu reinigenden Stoffstroms durch die Kapazität voran- oder nachgeschalteter Anlagen vorgegeben sein. Weiterhin ist die Adsorptionskapazität der Adsorptionsmasse begrenzt, so dass eine bestimmte Menge Adsörptionsmasse lediglich über einen bestimmten Zeitraum für das erfindungsgemäße Verfahren benutzt werden kann, bevor sie regeneriert werden muss. Dies macht zwar zunächst die Verwendung einer möglichst großen Menge Adsorptionsmasse wünschenswert, dem stehen allerdings die mit der Adsorbergröße steigenden Kosten entgegen. Die Menge an Adsorptionsmasse im Adsorber wird deshalb im Einzelfall so gewählt, dass einerseits der gewünschte Abreicherungsgrad und andererseits eine tolerierbar kurze Betriebszeit eines Adsorbers zwischen zwei Regenerierungen der Adsorptionsmasse erreicht werden. Vorteilhafterweise werden mindestens zwei Adsorber vorgesehen, von denen mindestens einer mit zu reinigendem Stoffstrom beaufschlagt werden kann, während die Adsorptionsmasse in mindestens einem anderen regeneriert wird. Dies ist eine routinemäßige Optimierungsaufgabe für den Fachmann.

Je nach der gewählten Adsorbergröße wird die maximale Aufnahmekapazität der darin enthaltenen Adsorptionsmasse für Kohlenmonoxid früher oder später erreicht, so dass sie regeneriert werden muss.

Zur Regenerierung der erfindungsgemäßen Adsorptionsmasse wird zunächst der zu reinigende Stoffstrom abgestellt, vorzugsweise wird er in einen parallelen, mit frischer oder regenerierter Adsorptionsmasse gefüllten Adsorber geleitet.

Die zu regenerierende Adsorptionsmasse wird anschließend regeneriert. Dies geschieht durch Desorption. Dabei ist es unerheblich, ob vor der Desorption das adsorbierte Kohlenmonoxid katalytisch mit möglicherweise adsorbiertem Sauerstoff oder rein chemisch durch Reaktion mit in der Adsorptionsmasse vorhandenem Kupferoxid zu Kohlendioxid oder auf andere Weise, etwa mit etwaige vorhandenem Wasserstoff zu Methanol oder Methan abreagiert, und diese Reaktionsprodukte anschließend desorbieren, wesentlich ist die Wiederherstellung der Adsorptionskapazität der Adsorptionsmasse.

Die Desorption wird durch Überleiten eines Fluids, vorzugsweise eines Gases, durch Erhöhen der Temperatur oder durch eine Kombination dieser Maßnahmen durchgeführt. In bevorzugter Weise wird der Adsorber mit der zu regenerierenden Adsorptionsmasse mit einem Gas durchströmt und dabei aufgeheizt. Das Gas kann inert sein wie beispielsweise Stickstoff, Methan oder Argon, es ist jedoch auch möglich, Wasserstoff zu verwenden, in diesem Fall wird das CO zu Methanol oder Methan umgesetzt. Die Desorptionstemperatur wird im allgemeinen auf einen Wert von mindestens 50°C, vorzugsweise mindestens 100°C und in besonders bevorzugter Weise mindestens 150°C sowie im allgemeinen höchstens 400°C, vorzugsweise höchstens 350°C und in besonders bevorzugter Weise höchstens 300°C eingestellt. Beispielsweise ist eine Desorptionstemperatur von ca. 220°C geeignet. Die Dauer der Regenerierung ist typischerweise im allgemeinen mindestens 1 Stunde, vorzugsweise mindestens 10 Stunden und in besonders bevorzugter Weise mindestens 15 Stunden sowie im allgemeinen höchstens 100 Stunden, vorzugsweise höchstens 50 Stunden und in besonders bevorzugter Weise höchstens 30 Stunden.

Im Anschluss an diese Regenerierung ist die Adsorptionsmasse im allgemeinen sofort zum erneuten Einsatz bereit. Im Einzelfall - insbesondere wenn sich der gewünschte Anteil an metallischem Kupfer gegenüber frisch aktivierter Adsorptionsmasse verändert hat - kann es empfehlenswert oder erforderlich sein, die Adsorptionsmasse einer erneuten Aktivierung zu unterziehen.

Mit der erfindungsgemäßen Adsorptionsmasse und dem erfindungs= gemäßen adsorptiven Verfahren ist es möglich, Kohlenmonoxid aus Stoffströmen einfach und in wirtschaftlicher Weise zu entfernen. Die so gereinigten Stoffströme können anschließend bestimmungsgemäß verwendet werden.

## Patentansprüche

1. Adsorptionsmasse, die aus 30 bis 99,8 Gew.-% Kupfer, als CuO berechnet, 0,1 bis 69,9 Gew.-% Zinkoxid und 3 bis 69,9 Gew.-% Zirkondioxid besteht, jeweils bezogen auf die Gesamtmenge der Adsorptionsmasse, wobei sich die Anteile der einzelnen Komponenten zu 100 Gew.-% addieren, wobei Kupfer teilweise in metallischer Form und teilweise in Form von Kupfer(I)- und/oder Kupfer(II)oxid vorliegt.

2. Verfahren zur Entfernung von Kohlenmonoxid aus Kohlenmonoxid enthaltenden Stoffströmen durch Adsorption an einer Adsorptionsmasse, **dadurch gekennzeichnet, dass** man den Kohlenmonoxid enthaltenden Stoffstrom mit einer Adsorptionsmasse nach Anspruch 1 in Kontakt bringt.

3. Verfahren nach Anspruch 2, **dadurch gekennzeichnet, dass** man Kohlenmonoxid aus einem flüssigen Alkenstrom entfernt.

4. Verfahren nach Anspruch 3, **dadurch gekennzeichnet, dass** es sich bei dem flüssigen Alkenstrom um Propen, 1-Buten, 2-Buten, 1,3-Butadien, Butengemischen oder Buten-/Butadiengemischen handelt.

5. Verfahren nach Anspruch 4, **dadurch gekennzeichnet, dass** man Kohlenmonoxid aus einem flüssigen Propenstrom entfernt.

6. Verfahren nach Anspruch 2, **dadurch gekennzeichnet, dass** man die Adsorptionsmasse vor ihrer Verwendung durch Behandlung mit einem Reduktionsmittel aktiviert.

7. Verfahren nach Anspruch 6, **dadurch gekennzeichnet, dass** man die Adsorptionsmasse durch Kontakt mit einem Wasserstoff enthaltenden Gas aktiviert.

8. Verfahren nach Anspruch 2, **dadurch gekennzeichnet, dass** man die Adsorptionsmasse nach Erreichen ihrer Aufnahmekapazität durch Erwärmen auf eine Temperatur im Bereich von 50 bis 400°C und/oder Durchströmen einer Schüttung der zu regenerierenden Adsorptionsmasse mit einem Gas regeneriert.

9. Verfahren zur Entfernung von Kohlenmonoxid aus Kohlenmonoxid und Sauerstoff enthaltenden Stoffströmen durch katalytische Umsetzung von Kohlenmonoxid mit Sauerstoff zu Kohlendioxid, **dadurch gekennzeichnet, dass** man die in Anspruch 1 definierte Adsorptionsmasse als Katalysator verwendet.

## Claims

1. An adsorption composition which consists of from 30 to 99.8% by weight of copper, calculated as CuO, from 0.1 to 69.9% by weight of zinc oxide and from 3 to 69.9% by weight of zirconium dioxide, in each case based on the total amount of the adsorption composition, the proportions of the individual components totaling 100% by weight, copper being present in part in metallic form and in part in the form of copper(I) oxide and/or copper(II) oxide.

2. A process for removing carbon monoxide from carbon-monoxide-comprising substance streams by adsorption to an adsorption composition, which comprises bringing the carbon-monoxide-comprising substance stream into contact with an adsorption composition according to claim 1.

3. The process according to claim 2, wherein carbon monoxide is removed from a liquid alkene stream.

4. The process according to claim 3, wherein the liquid alkene stream comprises propene, 1-butene, 2-butene, 1,3-butadiene, butene mixtures or butene/butadiene mixtures.

5. The process according to claim 4, wherein carbon monoxide is removed from a liquid propene stream.

6. The process according to claim 2, wherein the adsorption composition is activated prior to its use by treatment with a reducing agent.

7. The process according to claim 6, wherein the adsorption composition is activated by being contacted with a hydrogen-comprising gas.

8. The process according to claim 2, wherein the adsorption composition is regenerated after reaching its adsorption capacity by heating it to a temperature in the range from 50 to 400°C and/or passing a gas through a bed of the adsorption composition to be regenerated.

9. A process for removing carbon monoxide from carbon-monoxide- and oxygen-comprising substance streams by catalytic reaction of carbon monoxide with oxygen to give carbon dioxide, which comprises using the adsorption composition defined in claim 1 as catalyst.

## Revendications

1. Masse d'adsorption, constituée par 30 à 99,8% en poids de cuivre, calculé sous forme de CuO, 0,1 à 69,9% en poids d'oxyde de zinc et 3 à 69,9% en poids de dioxyde de zirconium, à chaque fois par rapport à la quantité totale de la masse d'adsorption, la somme des proportions des différents composants valant 100% en poids, le cuivre se trouvant en partie sous forme métallique et en partie sous forme d'oxyde de cuivre (I) et/ou de cuivre (II).

2. Procédé pour éliminer le monoxyde de carbone de flux de matières contenant du monoxyde de carbone par adsorption sur une masse d'adsorption, **caractérisé en ce qu'**on met en contact le flux de matières contenant le monoxyde de carbone avec une masse d'adsorption selon la revendication 1.

3. Procédé selon la revendication 2, **caractérisé en ce qu'**on élimine le monoxyde de carbone d'un flux liquide d'alcène(s).

4. Procédé selon la revendication 3, **caractérisé en ce qu'**il s'agit, pour le flux liquide d'alcène(s), de propène, de 1-butène, de 2-butène, de 1,3-butadiène, de mélanges de butènes ou de mélanges butène/butadiène.

5. Procédé selon la revendication 4, **caractérisé en ce qu'**on élimine le monoxyde de carbone d'un flux liquide de propène.

6. Procédé selon la revendication 2, **caractérisé en ce qu'**on active la masse d'adsorption avant son utilisation par traitement avec un réducteur.

7. Procédé selon la revendication 6, **caractérisé en ce qu'**on active la masse d'adsorption par contact avec un gaz contenant de l'hydrogène.

8. Procédé selon la revendication 2, **caractérisé en ce qu'**on régénère la masse d'adsorption, après qu'elle a atteint sa capacité d'absorption, par chauffage à une température dans la plage de 50 à 400°C et/ou en faisant passer un gaz dans la masse d'adsorption à régénérer en vrac.

9. Procédé pour éliminer le monoxyde de carbone de flux de matières contenant du monoxyde de carbone et de l'oxygène par transformation catalytique de monoxyde de carbone avec de l'oxygène en dioxyde de carbone, **caractérisé en ce qu'**on utilise la masse d'adsorption définie dans la revendication 1 comme catalyseur.
